# EUROPEAN PATENT APPLICATION

(11) **EP 2 575 399 A1**
(43) Date of publication of application: **03.04.2013**
(21) Application number: 11183630.0
(22) Date of filing: 30.09.2011
(51) Int. Cl.: H04W 52/02

(54) **System configured to be communicably connected to network nodes of a communication network**

(71) Applicant: Hitachi, Ltd., Chiyoda-ku Tokyo 100-8280 (JP)
(72) Inventor: Lin, Lan, 06400 Cannes (FR)
(74) Representative: MERH-IP Matias Erny Reichl Hoffmann

(57) **Abstract**

The present invention relates to a system 100 configured to be communicably connected to network nodes A, B of a communication network 200, the system 100 comprising communication means 110 for communicating with other network nodes A, B of the communication network 200, communication control means 120 for controlling the communication means 110, the communication control means 120 being configured to switch on/off the communication means 110 and/or switch between an active mode and a sleeping mode of the communication means 110, processing means 130 for executing one or more applications, and application management means 140 configured to manage the one or more applications to be executed by the processing means 130, the application management means 140 being configured to activate/deactivate one or more of the applications.

## Description

The present invention relates to a system, in particular a single apparatus or a system of plural apparatuses, which is configured to be communicably connected to network nodes of a communication network.

### Background of the Invention

In the prior art, there are known plural configurations for wired and/or wireless communication networks enabling communication between a plurality of network nodes including wireless networks, in particular mobile networks such as a vehicular network, using different communication technologies and/or communication protocols.

According to some communication protocols of such communication networks, some or all of the network nodes may be required to communicate with each other regularly, repeatedly, periodically and/or depending on one or more of a plurality of communication-related applications, wherein communication between nodes requires electric energy. Here, it is naturally desirable to provide energy efficient communications, especially, in networks in which mobile nodes and/or remote nodes may be present which typically rely on a remote power supply or mobile power supply that is typically limited.

WO 2011/078961 A1 describes a power management method in an ad-hoc network in which nodes connected via a wireless communication network in an ad-hoc mode are required to transmit periodical beacon messages. In connection with the power management method for the purpose of energy efficiency, nodes may be switched between an active mode and a sleep mode. In particular, WO 2011/078961 A1 proposes that the nodes are periodically switched between active mode and sleep mode, wherein all nodes shall be kept awake at least during a periodically occurring time period referred to as ATIM window. However, despite the fact that the proposed algorithm is quite complex and relies on complicated time-matched behavior of all nodes of the network, due to the periodic switching, the power consumption may be still very high.

Moreover, the inventors of the present invention have found out that WO 2011/078961 A1 does not consider communication control on the basis of data content depending on applications and it also does not consider power management on the basis of an available energy supply level or on the basis of information on the local environment around nodes (which may be particularly be highly advantageous for networks, such as mobile ad-hoc networks, which at least partially include mobile nodes).

In view of the above, it is an object of the present invention to provide an improved power management configuration regarding the communication and requirements of a communication network comprising mobile and/or stationary nodes for the purpose of improving energy efficiency.

### Summary of the Invention

For solving the above-mentioned object, according to the present invention, there is proposed a system according to claim 1 which may be rendered by an apparatus or a system of a plurality of apparatuses. Dependent claims and further features described below relate to preferred embodiments of the present invention.

According to an aspect of the present invention, there is proposed a system, in particular an apparatus rendering the system or a system of a plurality of apparatuses, being configured to be communicably connected to network nodes of a communication network. The system may further be configured to be mounted to a network node of the communication system or render at least part of a network node of the communication system.

The system comprises communication means for communicating with network nodes of the communication network and communication control means for controlling the communication means. The communication means may particularly comprise receiving means for receiving signals and/or data from nodes of the network and/or transmitting means for transmitting signals and/or data to nodes of the network.

In addition, the system comprises processing means for executing one or more applications, in particular applications relating to communication and communication contents of communication between nodes of the network, and application management means configured to manage the one or more applications to be executed by the processing means.

According to the invention, it is proposed that the communication control means is configured to switch ON/OFF at least part of the communication means and/or switch between an active mode and a sleeping mode of at least part of the communication means, in particular for the purpose of energy efficiency and for reducing energy consumption of the communication means. In addition (or also alternatively), the application management means is configured to activate/deactivate one or more of the applications, in particular for the purpose of energy efficiency and for reducing energy consumption of the communication means and/or the processing means. In addition, the communication control means may also be configured to set the transmission power, the communication rate and/or other communication related parameters of the communication means. In addition, the application management means may also be configured to set the data transmission rate, data amount to be communicated and/or other application related activities of the processing means.

Accordingly, the invention provides an advantageous configuration according to which not only the communication means may be switched OFF or to a sleep mode in order to enable reducing energy consumption and increasing energy efficiency but there is additionally provided the functionality of application management by an application management means according to which one or more applications may be dynamically activated/deactivated in order to enable reducing energy consumption and increasing energy efficiency. It is to be noted that such applications processed on the processing device may often relate to communication service applications and/or information providing/requesting applications that may involve communication activities via the communication means. Accordingly, the activation and deactivation of applications may not only help reducing the energy consumption of the processing means but also the energy consumption of the communication means.

According to a preferred aspect of the invention, the system may further comprise electric power supply monitoring means for monitoring an electric power supply level of an electric power supply source providing electric power to at least one of the communication means, the communication control means, the processing means and the application management means (and/or also to other means of the system, such as e.g. the additional preferred means of the system mentioned below). This has the advantage that the power supply level can be monitored so as to enable to observe when and if a power supply level may be too low for some communication activities and/or for one or more applications.

According to a preferred aspect of the invention, the system may further comprise electric power consumption monitoring means for monitoring an electric power consumption level of at least one of the communication means, the communication control means, the processing means and the application management means (and/or also of other means of the system, such as e.g. the additional preferred means of the system mentioned below). Preferably, the electric power consumption monitoring means may be further configured to monitor an electric power consumption level required by processing the one or more applications and/or the communication requirements of the one or more applications including the electric power consumption level of the communication means when the one or more applications are processed. This has the advantage that the power supply consumption can be monitored so as to enable to observe how communication activities and processing of the one or more applications affects the energy consumption of the single means or the apparatus/system as a whole in order to optimize energy consumption.

Further preferably, the electric power consumption monitoring means may be further configured to record electric power consumption level history data indicative of electric power consumption level of the communication means when the one or more applications are processed. This has the advantage that the communication activity control and the application management may be based on history data indicating the energy consumption behavior during communication activities and the energy consumption behavior of single means or the whole system/apparatus when processing the one or more applications. This information can be used for communication activities control and application management in order to improve the energy efficiency during operation.

Further preferably, the communication means and/or the application management means may be configured to control the application processing means and/or the communication means in order to send the recorded electric power consumption level history data and/or electric power future demand estimation data indicating a future demand estimation on the electric power consumption level estimated on the basis of the recorded electric power consumption level history data to another network node repeatedly, in particular periodically, and/or upon request from the other network node. This allows processing and evaluating the information on the side of the other node such as a center station or a control station of the network in order to plan and optimize the more energy efficient communication control and application management at the system.

Further preferably, the electric power supply monitoring means may be further configured to request energy power supply in accordance with the energy level to be required to execute one or more applications on the basis of the monitored electric power consumption levels of the one or more applications. This is applicable to stationary power demand supply networks in which power is dynamically shared among different stations of the power network upon request. In such power networks, the system may appropriately request for power on the basis of the observed energy consumption behavior of single means or the whole apparatus/system.

Further preferably, the communication control means may be configured to control the communication means on the basis of the electric power supply level monitored by the electric power supply monitoring means and/or on the basis of the electric power consumption level monitored by the electric power consumption monitoring means. Preferably, according to the before-mentioned aspect, the communication control means may be configured to switch ON/OFF the communication means on the basis of the electric power supply level monitored by the electric power supply monitoring means and/or on the basis of the electric power consumption level monitored by the electric power consumption monitoring means; and/or the communication control means may be configured to switch the communication means between a sleep mode and an active mode on the basis of the electric power supply level monitored by the electric power supply monitoring means and/or on the basis of the electric power consumption level monitored by the electric power consumption monitoring means; and/or the communication control means may be configured to set communication parameters such as transmission power and transmission rate on the basis of the electric power supply level monitored by the electric power supply monitoring means and/or on the basis of the electric power consumption level monitored by the electric power consumption monitoring means. The above features allow to even better optimize the communication control since it may be performed on the basis of the current power status of the system and the expected power status which may be derived from the monitored energy consumption behavior of single means and/or the whole system/apparatus.

Further preferably, the application management means may be configured to manage the one or more applications on the basis of the electric power supply level monitored by the electric power supply monitoring means and/or on the basis of the electric power consumption level monitored by the electric power consumption monitoring means. Preferably, according to the before-mentioned aspect, the application management means may be configured to activate/deactivate one or more of the applications on the basis of the electric power supply level monitored by the electric power supply monitoring means and/or on the basis of the electric power consumption level monitored by the electric power consumption monitoring means; and/or the application management means may be configured to modify application processing activities such transmission rate and transmission data amount on the basis of the electric power supply level monitored by the electric power supply monitoring means and/or on the basis of the electric power consumption level monitored by the electric power consumption monitoring means. The above features allow to even better optimize the application management since it may be performed on the basis of the current power status of the system and the expected power status which may be derived from the monitored energy consumption behavior of single means and/or the whole system/apparatus.

According to a preferred aspect of the present invention, the application management means may be configured to activate/deactivate one or more of the applications in correspondence with priority information indicative of a priority ordering of the one or more applications. This provides the additional advantage that, depending on the power level, one or more applications may be activated while other applications may be deactivated on the basis of a given application priority.

Accordingly, the energy efficiency can be improved while the application management can be advantageously adapted to given priorities, conditions and needs that require some applications to remain activated always while others may be deactivated prior to or after other applications already have been deactivated according to the priority ordering. The priority ordering can be pre-determined for one or more conditions and states of the system or they can be dynamically adapted, e.g. on the basis of the current available energy level or the energy consumption or on the basis of detected conditions such as environmental conditions in the vicinity of the system/apparatus.

For example, the priority ordering of the one or more applications may be set in accordance with electric power consumption levels required for processing the one or more applications.

According to a preferred aspect of the present invention, the application management means may be configured to activate/deactivate one or more of the applications in correspondence with environment information indicative of environmental conditions in the environment of the network node. This has the advantage that environmental conditions in the vicinity of the system/apparatus may used to affect the application management dynamically in order to be adapted to the environmental conditions. Further preferably, especially in case the network is a traffic related network in which at least some of the nodes may be mobile nodes that are at the same time vehicles travelling in a road network, these environmental conditions may comprise at least one of weather conditions indicated in weather information data, traffic conditions indicated in traffic information data, visibility conditions indicated in visibility data (e.g. determined on the basis of time, season and weather data for estimating a visibility condition) and/or visibility sensor data acquired by a visibility sensor, and/or road network information.

Further preferably, the priority ordering of the one or more applications may be set in accordance with the environmental conditions in the environment of the network node.

According to a preferred aspect of the present invention, the communication control means may be configured to control the communication means on the basis of a network status being indicative of network conditions in the surrounding environment of the network node. Accordingly, it is advantageously possible to control communication activities on the basis of environmental conditions in the vicinity of the system/apparatus relating to the network, e.g. if or how many nodes are present in the vicinity of the system/apparatus and/or on the basis of the inter-distance of nodes or the like.

According to a preferred aspect of the present invention, the application management means may be configured to manage the one or more applications on the basis of a network status being indicative of network conditions in the surrounding environment of the network node. Accordingly, it is advantageously possible to manage applications on the basis of environmental conditions in the vicinity of the system/apparatus relating to the network, e.g. if or how many nodes are present in the vicinity of the system/apparatus and/or on the basis of the inter-distance of nodes or the like.

According to a preferred aspect of the present invention, the system may further comprise human machine interface means for indicating to a user whether one or more applications can be activated and/or deactivated (manually or automatically) via the human machine interface means on the basis of the available electric power supply level determined by the electric power supply monitoring means and/or how activating and/or deactivating the one or more applications affects the remaining energy supply.

According to a preferred aspect of the present invention, the system may further comprise node detecting means for detecting the presence of other network nodes in communication range of the network node.

Further preferably, the communication control means may be configured to switch ON the communication means or switch the communication means from sleep mode to active mode in case the node detecting means detects at least one other network node being present in the communication range of the network node and/or the communication control means may be configured to switch OFF the communication means or switch the communication means from active mode to sleep mode in case the node detecting means detects that no other network node is present in the communication range of the network node. This improves energy efficiency while at the same time assuring high connectivity to other nodes since the energy saving disabling of communication activities may be stopped as soon as it is detected that communication activities might actually be required due to the presence of another node.

According to a preferred aspect of the present invention, the system may further comprise distance determining means for determining a distance to other nodes in the communication range of the network node, wherein the communication control means switches ON the communication means or switches the communication means from sleep mode to active mode if the distance to the other network node determined by the distance determining means is below a predetermined threshold. This improves energy efficiency while at the same time assuring high connectivity to other nodes, when needed, since the energy saving disabling of communication activities may be stopped as soon as it is detected that communication activities might actually be required due to the presence of another node that is close to the apparatus/system.

Further preferably, the application management means may be configured to activate one or more of the applications in case the node detecting means detects at least one other network node being present in the communication range of the network node and/or the application management means may be configured to deactivate one or more of the applications in case the node detecting means detects that no other network node is present in the communication range of the network node. This improves energy efficiency while at the same time assuring appropriate application management since the energy saving deactivating applications may be stopped as soon as it is detected that deactivation of applications might actually be required due to the presence of another node.

Further preferably, the application management means may be configured to activate one or more of the applications in case the distance to the other network node determined by the distance determining means is below a predetermined threshold. This improves energy efficiency while at the same time assuring high connectivity to other nodes, when needed, since the energy saving disabling of applications may be stopped as soon as it is detected that applications might actually be required to be activated due to the presence of another node that is close to the apparatus/system.

According to a preferred aspect of the present invention, the system may further comprise node density determining means for determining a density of other network nodes in the communication range of the network node.

Further preferably, the communication control means is configured to control the communication means on the basis of the density of other network nodes in the communication range of the network node determined by the node density determining means. Further preferably, the communication control means may be configured to switch ON the communication means or switch the communication means from sleep mode to active mode in case the node density determining means determines that the node density is below a predetermined threshold and/or within a predetermined range and/or the communication control means may be configured to switch OFF the communication means or switch the communication means from active mode to sleep mode in case the node density determining means determines that the node density exceeds a predetermined threshold.

Further preferably, the application management means may be configured to activate one or more of the applications on the basis of the density of other network nodes in the communication range of the network node determined by the node density determining means.

According to another preferred aspect of the present invention, the communication means may comprise beaconing message sending/receiving means being configured to send and/or receive beaconing messages to/from other network nodes in the communication range of the network node even when the communication means is switched OFF or switched to a sleep mode by the communication control means.

In summary, the present invention enables to provide an improved power management configuration regarding the communication and communicational requirements of a communication network comprising mobile and/or stationary nodes and/or the applications supported by the communication network for the purpose of improving energy efficiency. The present invention is particularly applicable and functionally practicable in connection with communication networks in which network nodes are required to communicate with each other regularly, repeatedly, periodically and/or depending on one or more of a plurality of communication-related applications.

### Brief Description of the Figures

**Fig. 1** shows an exemplary and schematic view of a system according to an embodiment of the present invention.
**Fig. 2** shows an exemplary and schematic view of an environment detection means of an embodiment of the present invention.
**Fig. 3** shows an exemplary and schematic view of a vehicle and traffic detection means of an embodiment of the present invention.
**Fig. 4** shows an exemplary and schematic view of a power management means of an embodiment of the present invention.
**Fig. 5** shows an exemplary and schematic view of a communication control means of an embodiment of the present invention.
**Fig. 6** shows an exemplary and schematic view of an application management means of an embodiment of the present invention.
**Fig. 7** shows an exemplary and schematic view of a control method according to an embodiment of the present invention.
**Fig. 8** shows an exemplary and schematic view of a control method according to another embodiment of the present invention.
**Fig. 9** shows an exemplary and schematic view of a control method according to another embodiment of the present invention.
**Fig. 10** shows an exemplary and schematic view of a control method according to another embodiment of the present invention.
**Fig. 11** shows an exemplary and schematic view of a display unit of a human machine interface means of an embodiment of the present invention.
**Fig. 12** shows an exemplary and schematic view of a display unit of a human machine interface means of an embodiment of the present invention.
**Fig. 13** shows an exemplary and schematic view of a display unit of a human machine interface means of an embodiment of the present invention.
**Fig. 14** shows an exemplary and schematic view of an exemplary procedure of a power usage logging.

### Detailed Description of the Figures and of

### Preferred Embodiments of the Present Invention

Preferred embodiments of the present invention will be described below with reference to the accompanying figures. It is to be noted that the described features and aspects of the below-described embodiments may be modified or combined to form further embodiments of the present invention.

In the following description, it is assumed that the communication network is a mobile communication network (e.g. a vehicular ad-hoc network) which is formed among a plurality of mobile nodes, e.g. vehicles, and possibly stationary nodes, e.g. road side units. It is assumed that so-called Vehicle to Vehicle communications (V2V; mobile node to mobile node) and Vehicle to Infrastructure communications (V21; mobile to stationary) are possible (i.e. V2X). However, the present invention is not limited to such network configurations and can be applied to other types of communication networks, in particular wired and/or wireless networks of a plurality of network nodes, and, in particular communication networks utilizing ITS (Intelligent Transportation System) services. The present invention is particularly applicable and functionally practicable in connection with communication networks in which network nodes are required to communicate with each other regularly, repeatedly, periodically and/or depending on one or more of a plurality of communication-related applications such as ITS services.

For example, in a V2X based road side ITS system, a road side unit (sometimes also referred to as RSU) can be installed at the road side to provide one or multiple ITS services to road travelers via wireless communications. Such road side units may send different types of information to passing mobile nodes, such as vehicles, via wireless communications including road safety related information (e.g. road hazard information), traffic efficiency and traffic management information (e.g. speed limit, safety remind message, road congestion, recommended itinerary) and other client or travelers information (e.g. Point of Interest information, local commercial service, travelling service, multimodality information etc).

Nowadays, the trends of including Information and Communication Technologies (ICT) technologies in the sector of transportation and travelling services (ITS) are becoming more and more important. V2X technologies (vehicular communication) may be considered as one of the key technologies to improve the road safety, traffic management efficiency and travelling comfort of road users. ITS services rely on communications and information exchanges between different actors and stakeholders such as vehicles, road infrastructures (e.g. road side units), traffic management and road operators, communication service providers and road users.

Four categories of the ITS station can be considered, an ITS station being an entity (or system) that provides communication capacities for ITS applications:
● vehicle ITS station (OBU; on-board Unit): an ITS station that is embedded in vehicles supporting V2X communication capacities for ITS applications;
● road side ITS station (RSU; Road Side Units): an ITS station that is mounted at road side supporting V2X communication capacities for ITS applications;
● central ITS station: an ITS station that is equipped at the traffic management center or service provider server side supporting V2X communication capacities for ITS applications; and
● personal ITS station: an ITS station that is mounted at personal devices (e.g. smartphone, PND, or the like) supporting wireless communication capacities for ITS applications.

The present application can be applied to any of the above ITS stations and, in particular, the system according to the invention may relate to a system rendering any or at least part of any of the above-mentioned ITS stations, or even to a system comprising plural of the above-mentioned ITS stations.

An ITS station, in particular on-board units, road side units, and also personal ITS stations, may have constraints on the available energy level. However, such ITS services may require that the ITS station unit has sufficient electricity power supply to support the communication needs and the application execution of applications relating to the communication and the various ITS serviced. However, in some situations such as in a rural road environment or in an urban environment, road side units may be isolated from the power supply network and mounted with limited power supply units such as a battery or isolated energy generation means such as a solar panel. Therefore, the amount of electric energy available for supporting the operation of the road side unit may be limited. The power supply can be even more limited in some situations such as, e.g., during the night or during a bad weather condition when a solar panel cannot produce a sufficient amount of energy.

On the other hand, for the V2X system, it may be required that the system repeatedly or even periodically broadcasts a heartbeat message to other ITS stations, which may result in unnecessary energy consumption in some situations, e.g., in case there is currently no vehicle having an on-board unit approaching a road side unit. Even in situations where a road side unit is connected with the stationary power supply network and does, therefore, not have energy availability constraints, such unnecessary communication activities of the road side unit are preferably optimized with respect to overall energy efficiency of the communication network. For example, on-board units and road side units are required to broadcast periodic heartbeat messages to announce their presence, position and current status as well as other additional information e.g. information on the vehicle type in order to avoid potential avoidance.

Similar to the above-described road side unit of a vehicular communication network, electric vehicles (EV) or plug-in hybrid electric vehicles (PHEV) may participate in a (wireless) vehicular communication network as a mobile node, e.g. by being equipped with a wireless communication unit (sometimes referred to as on-board Unit OBU), wherein the communication means of the electric vehicle or plug-in hybrid electric vehicle will consume electric energy for the communications and data transmission. Typically, such equipped vehicles are required to broadcast messages, even though it may not actually be necessary in some situations such as in a loose traffic condition where no other vehicles are around.

Mainly for road safety applications, ITS stations, in particular on-board units and road side units, may be required to periodically transmit cooperative awareness messages (referred to as CAM). In particular, vehicles may be required to transmit such cooperative awareness messages as long as the vehicle engine/motor is turned on. Cooperative awareness messages may at least comprise position information informing other nodes about the position of the sending node. In case of vehicles, the cooperative awareness messages may provide the vehicle position as well as information regarding vehicle speed, vehicle traveling direction or even vehicle velocity (combined information on speed and traveling direction) and may further indicate other basic vehicle data. Typically, so-called cooperative awareness messages may be transmitted at a sending rate (i.e. message sending frequency; not to be confused with radio frequency of the transmitted signals) which may vary from 0.5Hz up to 10Hz.

Road side units may also be required to send other periodic messages such as cooperative awareness messages to oncoming vehicles or oncoming personal ITS stations in order to provide information on its position and maybe additionally information about its capacities. Furthermore, if a road side unit is used to provide other services such as sending traffic information and/or traveler information on Points of Interests and on positions of Points of Interest in the vicinity of the road side unit and related information of Points of Interest (a point of interest, or POI, is a specific point location that someone may find useful or interesting and is a commonly used term in the field of navigation services; Points of Interests may include positions of speed cameras, positions of fuel stations and/or charging station for electric vehicles, positions for public parking, etc.), information on road infrastructure, traffic status, and/or traffic regulations such as traffic lights (e.g. traffic light status data), information on potential road works, information on traffic signs, information on traffic conditions, information on road condition (such as wet road, icy road etc.), and/or speed limit information, information on traffic jams. Road side units may, in addition to cooperative awareness messages, be used to broadcast periodically service announcement messages (referred to as SAM). Typically, broadcasting of messages (e.g. CAM and/or SAM) does persist as long as the road side unit is installed and is operating.

In particular for some ITS applications, on-board units, road side units and also personal communication units such as personal ITS stations may form a wireless local ad-hoc network, each of the units rendering a node of the network. Such networks enable the exchange of information between the connected nodes without the assistance of communication infrastructure. Within such ad-hoc networks, data packets may be routed based on the geographical localization of the nodes in order to allow for dissemination of data packets to a specific geographical location or to a geographic area (sometimes referred to as geoNetworking).

The basic function of such ad-hoc networks may be formed by a so-called beaconing function according to which each node which participates to the network provides its real-time geographical location embedded in a beaconing packet that is repeatedly or even periodically transmitted so that each node is able to construct the routing function based on the local network connectivity. Such beaconing functions may represent the basic function of the geoNetworking and it may be running in the background as long as the node is operating, even when no other nodes are around.

One of the motivations for making use of direct communication between vehicles and between vehicles and road side units is to improve the road safety and reduce the accident fatalities. This technology is intended to enable the exchange of road hazard information within a short latency to other vehicles in order to avoid road accidents and to integrate the vehicles in the road infrastructure. Therefore, there exists strategic intention involving all relevant stakeholders in Europe to largely deploy V2X systems in vehicles and road infrastructure (including road side units) in particular for the road safety applications. In Europe, a specific radio spectrum is planned to be allocated for ITS services which are typically planned to utilize radio frequencies around 5.9GHz. The WiFi standards are modified for these technologies to support late latency communications (e.g. 802.11p).

However, continuous and permanent broadcasting of messages (such as e.g. CAM, SAM) and/or beacons and execution of communication applications consumes electric energy available in the system. Moreover, a road side unit or an on-board unit may provide many applications which need to exchange various amount of data depending on the application. For certain applications, continuous communication sessions may be needed to be maintained between ITS stations and the energy consumption may be even higher in these cases.

The inventors have found out that, in some situation, the broadcasting of the messages (e.g. CAM and SAM message) may not be useful for the applications. For example, when no vehicle is approaching towards a road side unit which is configured to send traffic information, there is actually no need for the road side unit to broadcast road traffic information or other information to vehicles. In some other situations, it may be preferable that one or more ITS applications should be provided while other applications may be deactivated. For such situations, it is preferable if there is provided a priority ordering of applications according to which applications with higher priorities are activated and applications with lower priorities are deactivated. For example, during bad weather conditions, it may be more important for road users to be informed of the bad road conditions on the road surface due to the bad weather conditions (e.g. wet road conditions, slippery road conditions, icy road conditions) than to be informed on traffic information such as information on a traffic congestion situation in 10km ahead, for example.

Due to the installation conditions and other constraint, the available power for an ITS station may be limited. For road side units, in some rural roads or isolated road side spots, it may for example not be possible to install road side units that are connected to a stationary power network. There may be used isolated power supply technologies such as utilization of a battery and/or a solar panel. For example, solar panels may suffer from limited power supply in some situations such as night time or during bad weather conditions. Also, when an on-board unit is equipped to an electric vehicle (EV) or a plug-in hybrid electric vehicle (PHEV), the power level may be even more constraint, given the already limited distance that can be covered by the power supply unit of the electric vehicle or the plug-in hybrid electric vehicle. Therefore, the unnecessary transmission of messages and communication of un-useful data will result in unnecessary consumption of electric energy. Such un-necessary consumption can become very important in particular when ITS systems are deployed to a large scale. Even in situations where there is no constraint on the power availability, the unnecessary transmission of messages may bring un-necessary power consumption with negative impact on the environment.

Accordingly, it is generally desired to improve energy efficiency and reduce energy consumption in ITS stations participating to an ITS communication networks such as traffic-related communication networks including ITS services (e.g. mobile ad-hoc networks such as vehicular ad-hoc networks). In particular, one can assume that the energy consumption caused by this permanent communication may have impact on the battery life time in particular when the available energy is limited in an electric vehicle or a plug-in hybrid electric vehicle. Therefore, the enabled driving distance of the electric vehicle or a plug-in hybrid electric vehicle can therefore be inconveniently reduced due to the communication activities.

Accordingly, the energy consumption at ITS stations such as at the road side units and the on-board units in a vehicular communication network may need to be intelligently managed based on some specific criteria in order to improve the energy consumption efficiency.

In order to improve the energy efficiency of an ITS system, the present invention may provide a system that enables the communications capacities and applications dynamically based on the local environment around a node, e.g. the local environment of the road traffic (traffic network topology and/or traffic condition in the vicinity of the node), user needs, and the communication needs of the applications and also the available energy level. It is to be noted that the present invention may be also applied to ITS systems that do not have constraint of the power supply in order to efficiently consume the power.

In view of the above considerations, the present invention targets at providing a power management method and a system working under the power management method in order to satisfy power management needs for network nodes of a communication network such as nodes of a vehicular communication network including nodes such as road side units and/or on-board units. This shall be achieved by:
● Intelligently activating the communication activities only when necessary, and
● Intelligently activating one or more applications (e.g. ITS applications) in order to satisfy the needs of the current driving environments and /or the drivers and travelers needs in order to improve the energy consumption efficiency of the network or an ITS system.

According to the invention, the system may include an communication control means that can switch ON/OFF the communication means or switch the communication means between active and sleep mode, an application management means that may decide on activation/deactivation of one or more applications and information to be sent out based on defined conditions, and/or an energy management means that monitors, manages and records the energy consumption levels.

For example, the application management means may manage activation/deactivation of one or more applications based on the following criteria:
● based on an application priority: e.g. road safety applications, road hazard warning as high priority applications;
● based on local conditions around the node: e.g. the weather conditions, the traffic conditions, the visibility conditions and the local road network topology;
● based on the communication needs of the one or more applications: e.g. the connection-less communication or session required communication, the amount of data to be provided; and/or
● based on the available energy level.

For example, the communication control means may switch ON/OFF the communication means or switch the communication means between active mode and sleep mode based on specific conditions:
● based on the presence of vehicles and other communication nodes: e.g. the communication can be switched ON only when vehicles are detected in the surrounding area;
● based on the traffic network congestion condition in the vicinity of the node; and/or
● based on the communication needs and requirements.

For the above mentioned conditions, the system may further include a local environment determining means for determining local environment conditions in the vicinity of the node such as the local weather conditions (e.g. directly by sensor means such as air pressure detecting means, temperature detecting means, air humidity detecting means, rain sensors or the like and/or indirectly by receiving weather information from a weather information source), visibility conditions (e.g. directly detected by visibility sensor means) and traffic conditions (e.g. directly detected by a node detecting means which detects other nodes or a density of other nodes in the vicinity of the node directly and/or indirectly on the basis of received traffic information from a traffic information source); and/or vehicle detection means for detecting the presence of other nodes such as other vehicles in the surrounding area.

In some embodiments of the present invention, the proposed system may also record history data indicating the usage of the power consumption (e.g. history data indicating a power consumption pattern relating to communication activities and/or application processing) so that it may provide the information to the smart grid and or to the ITS system management operators (e.g. RSU exploitation operator), in order that the ITS station management center and smart grid to intelligently adjust the power supply plan to optimally manage the ITS system services provisioning.

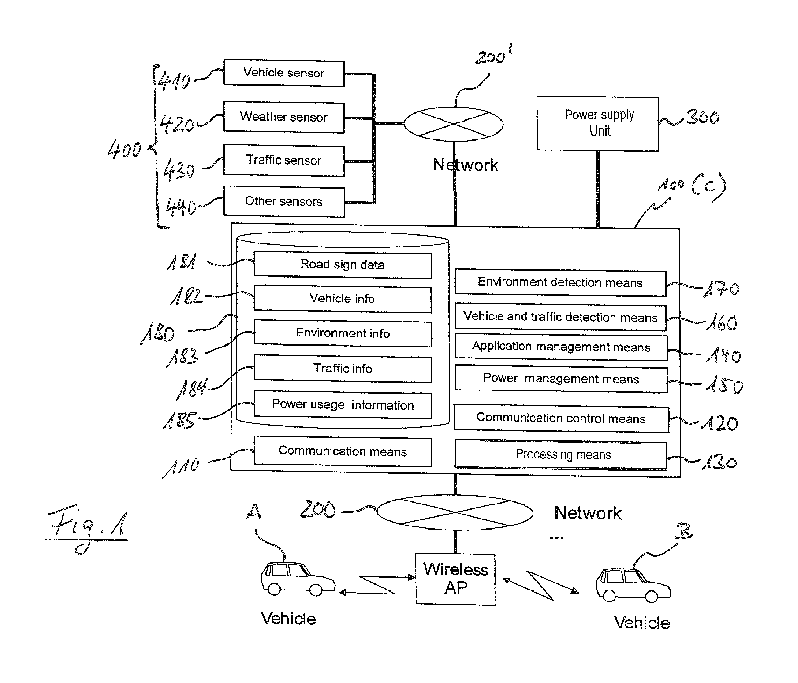

**Fig. 1** shows a system 100 according to an embodiment of the present invention. Exemplarily, the system according to this embodiment is embodied by a single apparatus 100 (e.g. mounted to/rendering a road side unit or mounted to/rendering an on-board apparatus, or mounted to/rendering a personal ITS station) which renders a node C of a wireless traffic-related communication network 200 which can be communicably connected via the wireless network 200 to other nodes A and B of the network (exemplarily rendered by vehicles in **Fig. 1**).

**Fig. 1** presents the general architecture of an embodiment of the proposed system. In addition to a communication means and application processing means, the system may includes several sub systems that are used to intelligently manage the ITS service functioning in order to save the power consumption.

However, the present invention is not limited to embodiments in which the system is embodied by a single apparatus but may relate to a system of plural apparatuses. For example, the system may comprise plural ITS stations such as at least one of one or more on-board units, one or more road side units and one or more personal ITS stations. In particular, the system may comprise a plurality of road side units, each comprising a communication unit and a processing unit, which may be connected to a power management unit comprising communication control unit and/or application management unit.

The system/apparatus 100 in **Fig. 1** comprises communication means 110 for communicating with the other network nodes A, B of the communication network 200, communication control means 120 for controlling the communication means 110, processing means 130 for executing one or more applications (e.g. ITS related applications), and application management means 140 configured to manage the one or more applications to be executed by the processing means 130. In particular, the communication control means 120 is configured to switch ON/OFF the communication means 110 and/or switch between an active mode and a sleeping mode of the communication means 110 and the application management means 140 is configured to activate/deactivate one or more of the applications; and/or to set up the communication parameters (such as transmission rate, transmission power or the like) to be used/applied by the communication means.

The system in **Fig. 1****,** referred to as apparatus 100 in the following, further comprises power management means 150 for performing power management, vehicle and traffic detection means 160 for detecting vehicles and traffic conditions in the vicinity of the apparatus 100, environment detection means 170 for detecting environment conditions in the vicinity of the apparatus 100 and data storage means 180 for storing data, exemplarily including road sign data 181, vehicle information 182, environment information 183, traffic information 184, and power usage information 185.

Moreover, the apparatus 100 is connected via a network 200' to external sensor means 400, exemplarily including a vehicle sensor 410, a weather senor 420, a traffic sensor 430, or other sensors 440. Of course, the present invention is not limited to the utilization of external sensors and the similar sensors may also be included in the system/apparatus 100 as internal sensor means.

Apparatus 100 is further connected to an external power supply unit 300 which supplies electric energy to the communication means 110, communication control means 120, processing means 130, application management means 140, power management means 150, vehicle and traffic detection means 160, environment detection means 170, and storage means 180. Of course, the present invention is not limited to the use of an external power supply unit 300 and an internal power supply unit may be comprised in the system/apparatus 100 as well.

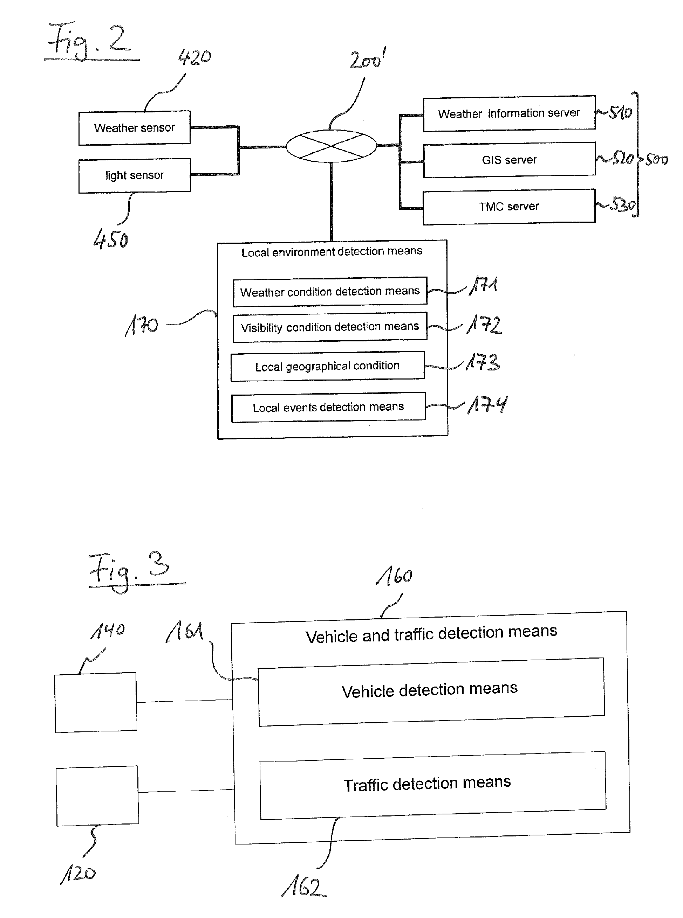

First, the description will focus on the environment detection means 170. The environment detection means 170 is configured to detect conditions relating to the local driving environment of the apparatus 100. An exemplary schematic view of the environment detection means 170 is shown in **Fig. 2****.** The environment detection means 170 comprises a weather condition detection means 171 for detecting local weather conditions in the vicinity of the apparatus 100, a visibility condition detection means 172 for detecting visibility conditions in the vicinity of the apparatus 100, local geographical condition detection means 173 for detecting local geographical conditions in the vicinity of the apparatus 100, and local events detection means 174 for detecting local events (such as e.g. road accidents or the like) in the vicinity of the apparatus 100.

Furthermore, the environment detection means 170 may be communicably connected via the network 200' with an information providing external server system 500, e.g. the external server system 500 including a weather information providing server 510, a geographic information system (GIS) server 520, and a traffic message channel (TMC) server 530, and external sensors such as the weather sensor 420 and a light sensor 450 (which may detect the presence and absence or the strength of sunlight used for power supply purposes, e.g. by means of a solar panel).

In this connection, it is to be noted that - especially in the context of ITS services - the local environment conditions can be classified into different categories including the following categories: weather conditions, visibility conditions, local geographic conditions, and/or local event conditions.

Weather conditions: the current weather conditions may be detected by the specific weather sensor 420, potentially including sensors such as temperature sensor, humidity sensor etc. and/or by being informed about the specific local weather conditions by weather information provided from the weather information server 510 (provided that the ITS system is connected to a weather information server 510).

Visibility conditions: the visibility conditions in the vicinity of the apparatus 100 may be detected either by specific weather sensors 420 (e.g. via a humidity sensor detecting fog or the like, smoke sensors or direct visibility sensing sensors) and/or can be determined on the basis of history data combined with the local time and current seasons and/or weather condition data.

Local geographic conditions: the local geographic conditions may describe the local geographic topology and/or road topology environment in the vicinity of the apparatus 100, such as e.g. road conditions including road type (e.g. highway, rural road etc.), road topology including information on intersections, dangerous curves, bridges etc. in the vicinity of the apparatus 100. The local geographic conditions may be pre-configured if the apparatus 100 is stationary (e.g. for road side units); may be obtained from a digital map data, e.g., if the apparatus 100 is mounted to or renders a mobile node (such as an on-board unit of a vehicle or a personal ITS station carried by a user who is moving on a vehicle or walking), and/or may be obtained from geographic information system (GIS) server 520.

Local event conditions: the local event conditions may include road event information such as information on accidents or other events affecting road safety and/or road hazard information. Such information may be provided by specific sensors and or informed by other ITS stations such as, e.g., traffic management centers and/or other road side units or vehicles. Such information is normally safety related information and therefore needs to be received by the ITS station.

The environment detection means 170 may be used by the apparatus 100 to dynamically control the communication means 110 by the communication control means 120 and to dynamically activate/deactivate the one or more applications by the application management means 140 based on the local environment in the vicinity of the apparatus 100 detected by the environment detection means 170.

For example, if a road side unit processes one or more applications relating to speed limit information, the speed limit information can be depending on the weather conditions and/or on the local geographic conditions. The road side unit can then provide the corresponding speed limit information to vehicle in its vicinity depending on the weather conditions and/or on the local geographic conditions. In another example, if the road side unit is configured to provide dangerous curve information indicating the presence of a dangerous curve (as a first application) and the Point of interest information (as a second application, both applications may typically be provided simultaneously by road side units), in a bad visibility condition or a bad weather condition, it may be more important to inform the dangerous curve information than the POI information, i.e. it is preferable that the first application is assigned a higher priority than the second application according to a priority ordering for bad visibility conditions or bad weather conditions.

Accordingly, it is preferable if - for each specific environment condition - each application provided by the apparatus 100 can be prioritized in accordance with the specific environment condition. Especially, if the apparatus 100 has a limited power supply, the application management means 140 is preferably configured to activate high prioritized applications according to the specific environment and to deactivate applications having a lower priority according to a pre-determined priority ordering.

The environment detection means 170 may be rendered by a software application and/or an interface to the specific sensors 420 and 450 or information servers 510 to 530. The apparatus 100 can be triggered on by sensor or sensor network or a distant server by sending a specific wake up message together with the information of the detected environment.

In the following, the optional vehicle and traffic detection means 160 shall be described in more detail. The vehicle and traffic detection means 160 is exemplarily and schematically illustrated in **Fig. 3** and it is configured to detect the approaching mobile nodes such as e.g. vehicles and the traffic conditions in the vicinity of the apparatus 100.

The vehicle and traffic detection means 160 comprises a vehicle detection means 161 for detecting mobile nodes and in particular for detecting vehicle. The vehicle detection can be, e.g., realized with specific road side sensors (such as movement sensors, contact sensors implemented in the road or the like) and/or via a communication signal received from the approaching mobile node.

When detecting an approaching mobile node, the apparatus 100 can be controlled (e.g. by the communication control means 120) such as to switch ON the communication means 110 or switch the communication means 110 into an active mode in order to be enabled to establish the a network communications with the approaching mobile node and, if necessary, to activate one or more of the applications processed by the processing device 130 (e.g. by the application management means 140).

Compared to the vehicle detection via the communication signal of the approaching mobile node, the usage of other vehicle sensors that directly detect the presence of an approaching mobile node (such as the specific road side sensors mentioned above) does not require that the two nodes are in the line of sight (LoS) conditions, which can suffer from the radio propagation conditions and from the communication range. For example, a road side unit may be located at an intersection where the radio propagation can be blocked by the surrounding environment objects and, if the road side unit is connected with a vehicle sensor which is disposed to a position near to the intersection road segment, the vehicle sensor can detect an approaching vehicle (embodying a mobile node) before the vehicle enters into the radio range of the road side unit. The road side unit is therefore enabled to switch ON the communication means 110 or switch the communication means 110 to an active mode in advance (e.g. by means of the communication control means 120) and/or activate one or more applications in advance (e.g. by means of the application management means 140).

Furthermore, if an approaching mobile node is detected, the road side unit may further increase the transmission power of the communication means 110 (e.g. by means of the communication control means 120) in order to ensure that the approaching mobile node can receive information reliably and at a sufficient time scale (e.g. early enough).

The vehicle and traffic detection means 160 further comprises a traffic detection means 162. The traffic detection means 162 is configured to detect the current traffic conditions in the surrounding area of the apparatus 100. This information can be detected by the specific traffic sensors attached to the apparatus 100 (e.g. traffic sensor 430, e.g. for determining a density of nodes in the vicinity of the apparatus 100 on the basis of received beaconing messages) and/or received from a traffic information provider (e.g. received from a traffic information server).

Based on the obtained traffic information, the apparatus 100 can dynamically adjust the duration during which the communication means 110 is switched ON (or switched to an active mode) by the communication control means 120 and/or dynamically adjust the duration during which one or more application are activated by the application management means 140. Furthermore, the application management means 140 may even dynamically adjust a priority ordering of applications on the basis of the obtained traffic information. For example, in a dense traffic condition, such as e.g. in a congested state, it may be more important for a road side unit to broadcast the recommended itinerary information (as a third application), while in a loose traffic condition, it may be more important for the road side unit to provide the speed limit information (as a fourth application).

The vehicle and traffic detection means 160 can be rendered as a software application and/or as an interface to the specific sensors or information servers similar to the environment detection means 170 described above. The apparatus 100 can be triggered ON by sensor or sensor network or a distant server by sending a specific wake up message together with the detected vehicle information (e.g. position, speed etc) and/or traffic status (e.g. dense traffic, average speed etc).

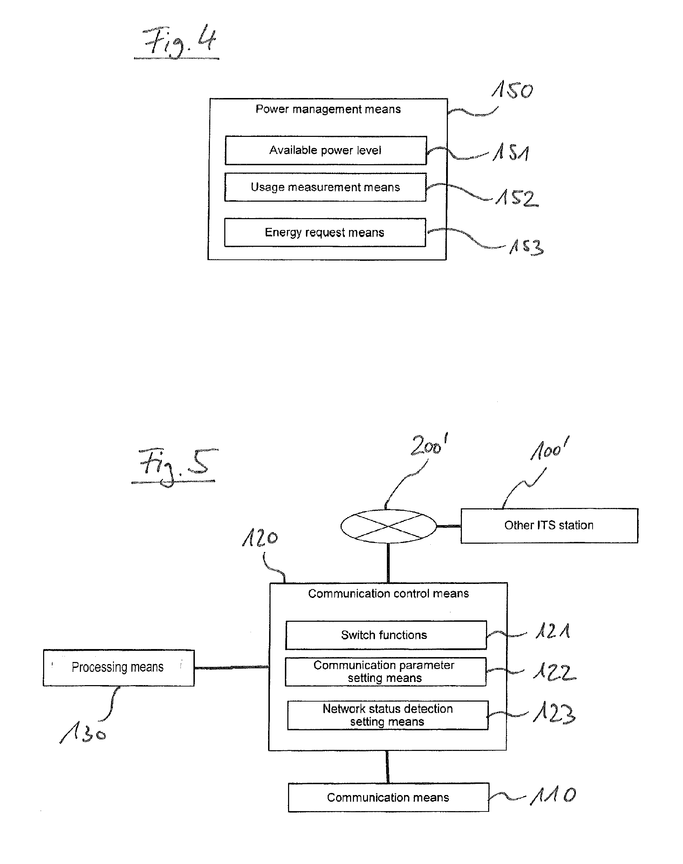

In the following, the description shall focus on the power management means 150 as exemplarily and schematically illustrated in **Fig. 4****.** The power management means 150 (embodying an electric power supply monitoring means) may be configured to measure the available power level of the power supply 300. Furthermore, the power management means 150 (embodying an electric power consumption monitoring means) may alternatively or additionally also monitoring the electric power consumption of the communication means 110 and the processing means 130, and, in case the power is supplied via a dynamic power network, the power management means 150 may further register the power request from the ITS services and provide the related information to the smart grid and/or energy utility companies (e.g. in order to request for an increase in power supply level).

As illustrated in **Fig. 4****,** the power management means 150 may include the following subfunction providing means: Available energy level determining means 151 (electric power supply monitoring means), energy usage measurement means 152 (electric power consumption monitoring means), and/or energy requesting means 153 for energy request purposes.

The available energy level determining means 151 is configured to measure the available power level of the power supply unit 300 and/or to provide the information to another ITS station and/or to the communication control means 120 for controlling the communication means 110 and to the application management means 140 for managing the one or more applications on the basis of the available energy level.

The energy usage measurement means 152 may be configured to record historical data on the energy consumption of the processing means 130 and/or the communication means 110 for different applications and the historical data is stored as data included in the power usage information 185. This historical data can then be either provided to energy management operators in order to efficiently define the energy supply plan for the apparatus 100 or be used by the apparatus 100 itself to predict the power needs for the future ITS application provisioning. The information can also be provided to the operator of the apparatus (e.g. a user of an on-board unit or the operator of a road side unit) to provide an overview of the energy consumption in order to optimize the ITS application management strategies to efficiently improve the energy consumption of the ITS station.

The energy requesting means 153 can be configured to determine the required energy level by the apparatus in order to satisfy the needs of the operation and/or it can be configured to send a request to an energy provider and/or to a power supply system.

In the following, the description is focused on the communication control means 120 which is exemplarily and schematically illustrated in **Fig. 5****.** The communication control means 120 is configured to controls the activities of the communication systems including the communication means 110. The communication control means 120 may switch ON/OFF the air interface of the communication means 110 and/or switch between an active mode and a sleeping mode of the communication means 110 in order to save the electric energy. Switching the communication system including the communication mode into the sleeping mode instead of switching it OFF advantageously enables the communication control means 120 to quickly wake up the communication means 110 (i.e. to quickly switch it into an active mode) as soon as it becomes necessary.

According to the embodiment of **Fig. 5****,** the communication control means comprises a switching means 121 providing the switching functionality, i.e. for switching ON/OFF the communication means 110 and/or switching between an active mode and a sleeping mode of the communication means 110, a communication parameter setting means 122 (e.g. for setting communication parameters such as the transmission strength, the transmission frequency, the radio frequency, or the like), and a network status detection setting means 123. The communication means may also be connected to the processing means (e.g. for applications running on the processing means and using communications via the communication means) and/or the application management means.

The switching function performed by the switching means 121 may be performed based on the needs of one or more applications. For example, if an application needs to be activated, the application management means 140 can activate the processing means 130 corresponding to the application in question, the process means 130 then sends a demand to the communication control means 120 to wake up one or various communication interfaces of the communication means 110 required for the execution of the respective application. On the other hand, the communication means 110 may also be configured to wake up one or more application via the communication control means 120 by requesting the processing means 130, the processing means 130 then negotiating with the application management means 140 to activate the respective one or more applications, e.g. if an antenna (receiving means) of the communication means 110 receives a radio signal. In particular, in the ITS spectrum, the radio frequencies about 5.9Ghz are typically dedicated to the ITS services and, if the antenna sends the radio signal at substantially this frequency range, the communication means 110 can be switched ON in order to listen to the received signal or received packet. Depending on the received signal/packet, the application management means 140 can activate specific applications required to process the received data.

If no specific application is activated in the apparatus 100 by the application management means, the communication control means 120 can still switch ON/OFF the communication means 110 in order to participate to the networking functions as a network node.

For example, the apparatus 100 may be woken up from the sleeping mode depending on the network connectivity status and/or network density status in order to be enabled to participate in the networking activities as an intermediate node in data dissemination.

The communication control means 120 can further be configured to adjust the communication parameters of the communication means 110, such as transmission power of a transmission means, antenna sensibility of a receiving means or the like, by the communication parameter setting means 122 in order to adjust the communication parameters to the communication needs.

For example, when a vehicle detection sensor 410 or 160 of a road side unit detects that a mobile node such as a vehicle is approaching at high speed and, therefore, will reach the road side unit in a short time period, the road side unit may need to be configured to transmit the speed information to this approaching mobile node as soon as possible. Then, the vehicle sensor 410 or 160 may initiate to wake up the communication means 110 of the road side unit by the communication control means 120 and the application management means 140 may activate an application which provides the vehicle speed data, the processing means 130 corresponding to this application provides the command and provides the data to the communication control means 120. The communication control means 120 may then make use of this vehicle speed data, e.g., in order to increase the transmission power for the speed limit information packet to be sent to the approaching node in order to reach the node earlier. On the other hand, if the communication means 110, during sleep mode, receives many beaconing signal from other nodes, the communication control means 120 may judge that there are enough nodes in the network for the packet dissemination and there is no need to participate to the network so that it may refrain from switching the communication means 110 to the active mode.

According to further aspects, the communication means 110 switching performed by the communication control means 120 may be based on one or more of the following conditions and criteria: based on an application demand (e.g. the processing means 130 under the switching of the application management means 140 can trigger the communication by activating one or more applications), based on a network status (the communication system can be switched ON in order to participate in the network activities, if required and if the available power allows for it), based on a Radio signal status (the communication means 110 can be switched ON by receiving radio signal at a specific frequency spectrum), based on communication parameters settings (the communication control means 120 can adjust the communication parameters), and the available power level (the power level may be repeatedly or periodically checked in order to control the activities of the communication means).

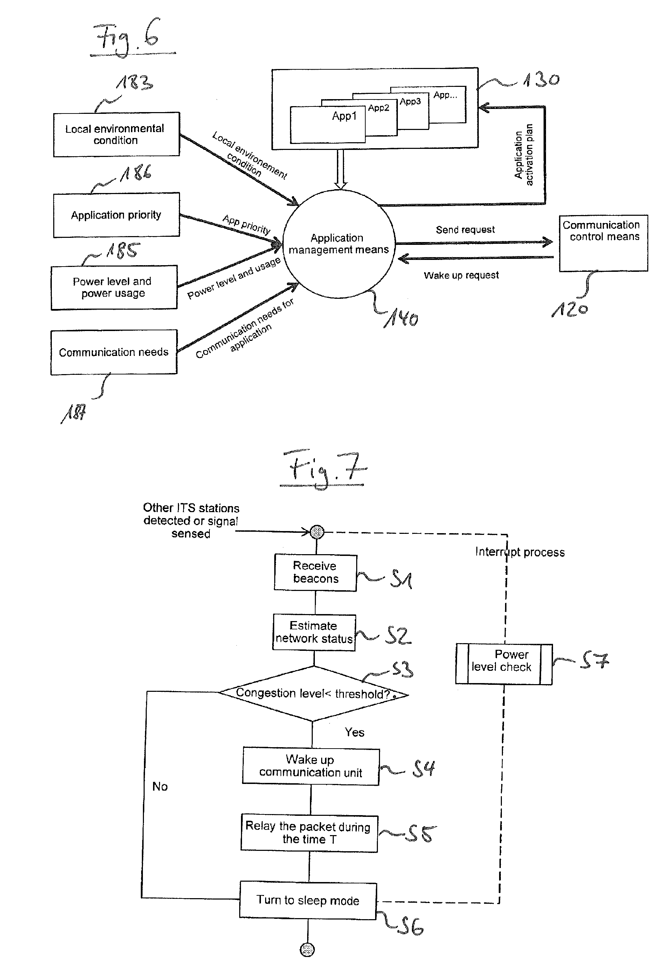

In the following, the description will focus on the application management means 140 and its functions. The operation of the application management means 140 according to the embodiment is exemplarily and schematically illustrated in **Fig. 6****.** The application management means is configured to manage dynamically the one or more available applications provided by the ITS system and processed on the processing means 130, e.g. in accordance with in an order of priority given by a priority ordering.

Specifically, the application management means 140 is configured to activate/deactivate one or more applications based on one or more of the following parameters: application priority ordering, local environment conditions, communication needs and requirements, the power supply level and/or the information on the power usage.

Application priority (e.g. indicated by data 186): an application priority ordering may assign a priority to applications that the ITS system provides. Generally, road safety application may be assigned higher priority than the non-safety applications. However, one can also define the application priority ordering based on the specific needs and conditions and/or based on regulations. The priority ordering of applications can be adjusted by other of the below-described parameters, however, some boundaries conditions can be set for each application in order to ensure a general priority patterns (e.g. road safety applications may be always prioritized with respect to applications relating to commercial services).

Local environment (e.g. indicated by data 183): the priority of applications can be dynamically modified depending on the local environment as described for the local environment detection means 170 and the vehicle and traffic condition detection means 160. The application management means 140 may implement a policy that modifies the application priority ordering on the basis of specific local environment conditions.

Communication needs (e.g. indicated by data 187): the communication needs of an application may be used to modify the application priority ordering in case the available power is limited. For example, when a map downloading application requires transmission of large amount of data, the application management means 140 of a road side unit may not activate the application when the available power is not sufficient and should be reserved for road safety related applications. Also, if an application for restaurant booking needs to maintain a continuous session with service provider that will consume high energy, the application management means 140 may suggest a user via a human machine interface (e.g. via a display means) not to manually activate the application because the available energy is low.

Power supply level (e.g. indicated by data 185): the activation/deactivation of the communication means 110 and or applications may always be judged based on the available power supply level and the possibility of potential future power supply level, if the application is activated.

Power usage (e.g. indicated by data 185): historical data of the power consumption of the processing of applications may be provided which may contain historical logs of the energy consumption of specific applications or of communicating the specific amount of data used by the application. As an example of such a power consumption data log, a log file (embodying historical data on the power consumption obtained by the energy consumption monitoring means) may contain the following data: data indicative of a local environment status, data indicative of a traffic status, data indicative of a time and date of the log, data indicative of a respective application type, data indicative of an amount of data transmission, data indicative of a communication system used and the corresponding communication parameters, and/or data indicative of the power consumption level.

Such log data can be used locally by the ITS services in order to improve the application management and the power consumption efficiency. Furthermore, the traffic historical data and status information can be used to predict the future traffic in order to estimate the required energy to be saved for the future traffic peaks. The information on the power consumption level per application can be used by the system to judge whether or not to activate an application based on the remained power level.

Furthermore, the logged data can be made available to a third part actors via the communication network, wherein the third part actors may be a energy management center of a smart grid or the ITS system operators. The power management center can make use of this information to improve the energy provision plan of the ITS system, while the ITS system operator can improve the ITS system application operating efficiency.

In the following, specific examples of embodiments of the present invention in the context of ITS services in a traffic communication network such as a mobile or vehicular ad-hoc network will be presented with reference to **Figs. 7 to 10****.** It is to be noted that an optional interrupt process may be provided for all of the methods described in connection with **Figs. 7 to 10****.** Specifically, the power management means 150 and, in particular, the electric energy supply monitoring means 151 may repeatedly, periodically or even continuously determine the available power supply level and, in case it is determined that the power supply level becomes less than a threshold, the interrupt process may be activated so that the methods of **Figs. 7 to 10** are interrupted, i.e. not carried out; in this connection please refer to steps S7, S18, S12, and S321 in **Figs. 7 to 10****.**

One of the examples applying an embodiment of the present invention is described with reference to **Fig. 7****.** In this example, the communication control means 110 is configured to switch ON the communication means 110 without receiving any specific application requests. In this example, supposing that other nodes are sending beaconing signals at a specific radio frequency spectrum in a standardized manner and frequency. The communication means 110 is switched ON to also send the beaconing to nodes in the vicinity of the apparatus 110.

By counting the beaconing received from other nodes (S1) in a predetermined time period via the communication means 110, the communication control means 120 is enabled to estimate the network congestion status on the basis of a density of nodes in the vicinity of the apparatus 100 (S2). A congestion level threshold may set and is compared with the estimated network congestion status (S3). If the congestion level is determined to be less than the set threshold, it is considered that the network is loose, and the communication means 110 may then be switched ON or switched from the sleeping mode to the active mode (S4) even in between the beaconing in order to be able to relay data packets (S5). Here, the activation duration for the communication means 110 can be set to a pre-defined time duration period T. Thereafter, the communication means 110 is switched OFF or switched to the sleeping mode (S6) in order to reduce the electric power consumption for saving electric energy. On the other hand, if it is determined in step S3 that the network congestion status is higher than the set threshold, the communication means 110 is switched OFF or switched to the sleeping mode (S6) in order to reduce the electric power consumption for saving electric energy.

Due to the dynamic changes of the positions and speeds of mobile nodes, the network topology of the network may dynamically change over the time and also space. If an ITS application of a node needs to send a high emergency message (e.g. a safety related message such as compiled by a road safety application), the message can be mounted to the beaconing packet as application payload. Since all nodes will be switched ON during the beaconing time window, the high priority message can then be still reliably received by other nodes.

Similarly, this function can be also used to manage the transmission of CAM messages. A CAM message may have a variable size between several tens of bytes to more than one hundred bytes. In the current standard, CAM messages are periodically sent at a sending frequency between 0.5Hz to 10 Hz in order that the receiving node is able to become aware of other nodes, in particular moving mobile nodes. This periodic broadcasting of CAM messages may result in a high network load.

However, in some situations, CAM information may not be useful for the receiving station, e.g. in cases in which the sending node is still too far away from the receiving node, and when the information contained in the CAM message has not changed since last CAM transmission. In these situations, according to the present invention, CAM transmissions can be switched OFF (e.g. as a specific ITS application) by the communication control means 120.

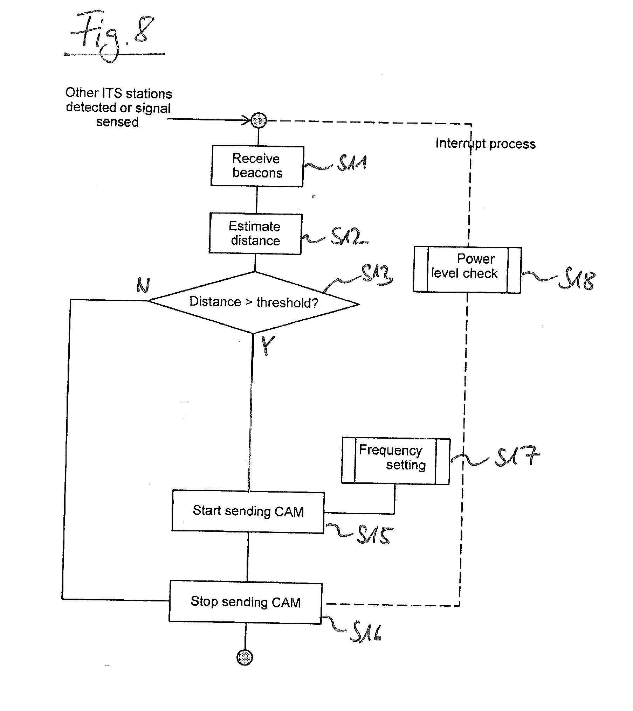

For example, as schematically illustrated in **Fig. 8****,** upon receiving a beaconing signal from another node (S11), the communication control means 120 may control the communication means 110 on the basis of a distance between the nodes. By means of a sensor or on the basis of position information included in the received beacon signal, it is possible to estimate the distance between the present receiving node and the node from which the beaconing was received (S12) and, if the distance is less than a threshold (S13). In the affirmative, the CAM message is attached to the next beaconing packet and transmitted (S15), possibly involving a frequency setting by the communication control means 120 (S17). After the CAM transmission of step S15, the communication means can be switched OFF and/or the CAM application can be deactivated (S16).

In a modified embodiment, if a CAM message has been already been sent previously and was received at another node, the communication control means 120 may check whether the CAM content has been modified with regards to the last transmitted CAM, and , If it is determined that the CAM content has not been modified with regards to the last transmitted CAM, the communication means can be switched OFF and/or the CAM application can be deactivated.

It is to be noted with regard to step S12 in **Fig. 8** that the distance between nodes can be expressed in geometric distance or also by a time during which the two nodes will presumably reach each other (e.g. determined on the basis of geometric distance and velocity/speed information).

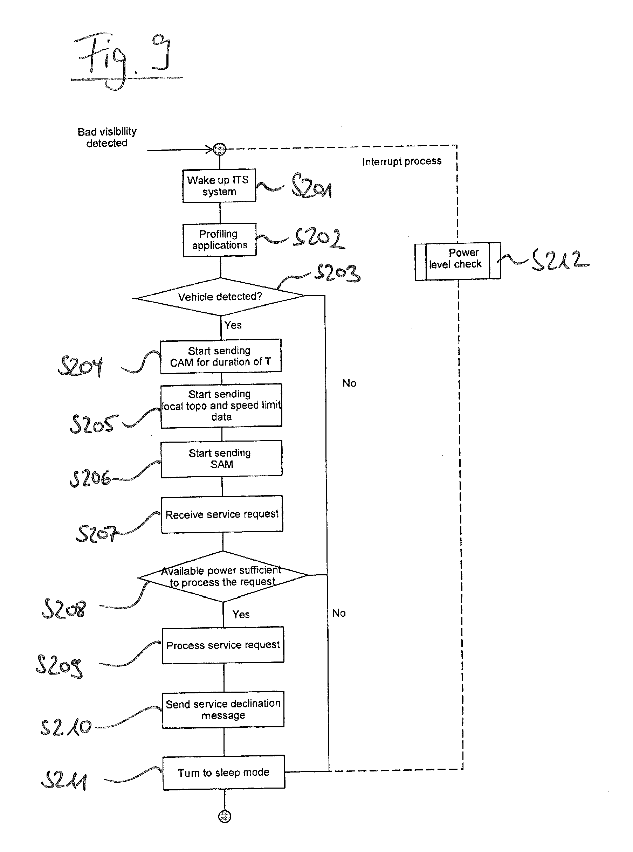

Another example of an embodiment of the present invention is described with reference to **Fig. 9****.** When the apparatus detects or is informed from external sensors/information servers that there is a bad visibility condition in the surrounding environment, the apparatus 100 is switched from a sleeping mode to an active mode (S201). In particular, the communication control means 120 switches ON the communication means 110 or switches the communication means 110 to the active mode. Then, referred to as application profiling in **Fig. 9****,** the application management means 140 controls the applications according to an application profile including a specific application priority ordering that is defined for the bad visibility conditions (S202) and profiles different applications in the order indicated by the priority ordering that is specified for the bad visibility condition.

The corresponding processing means 130 corresponding to activation/deactivation decision of the application management means in relation to the application ordering can then be enabled to construct messages to be sent to other nodes in the order of the priority ordering. When another node such as a vehicle is detected in the vicinity of the apparatus 100 (S203), the apparatus 100 starts sending the messages according to the priority ordering. In particular, the communication control means 120 controls the communication means 110 so that the communication means transmits the messages to the detected node according to the priority ordering. Exemplarily, for the situation of bad visibility, the apparatus may start sending CAM messages (S204) during a pre-determined time period T in order to avoid potential collisions. If the apparatus 100 renders or is mounted to a road side unit, it may also start sending CAM messages.

However, if the road side unit is located closed to an intersection or a dangerous curve, it is assumed that the road side unit should, as a most important application under the bad visibility conditions, most preferably send out immediately the local road topology information (including the driving priority) to mobile nodes such as vehicles as a warning to road users enabling them to pay attention to the oncoming dangerous road conditions even in the bad visibility condition (S205). Then, also speed limit information can be further more provided (as another application) to the approaching detected mobile node (S205).

If the road side unit can also provide some comfort and commercial services (as another application), it may broadcasts the SAM (service announcement message) to mobile nodes (S206).

On the other hand, if the mobile node that was detected in step S203 decides to initiate one or more services, it will send back a service request to the apparatus 100 that is then received in step S207. After receiving such a service request (S207), the communication control means 120 estimates the communication needs for providing the requested service(s) by e.g. the amount of data to be sent in connection with the requested service(s), the duration of the session to be established in connection with the requested service(s) or the like. Such information may be derived, for example, from historical data recorded by the power management means 150 (electric power consumption monitoring means 152) and the communication control means 120 may then judge (S208) whether the available energy level monitored by the power management means 150 (electric energy supply monitoring means 151) is sufficient to provide the requested service(s). This estimation may be based on the currently available energy level and/or some historical data or statistics data for the required energy consumption of the service provision.

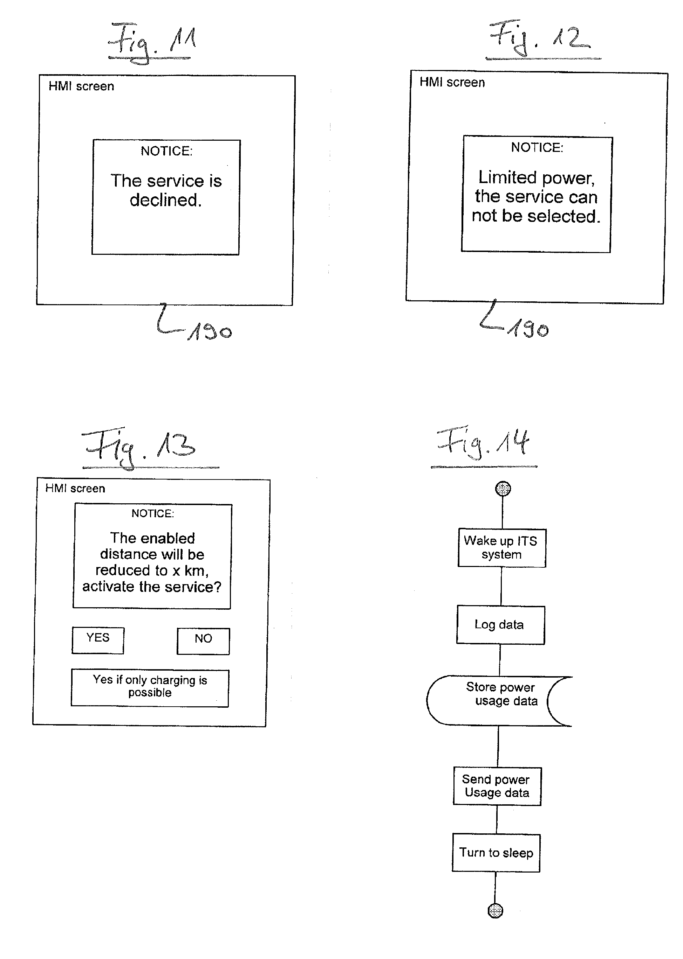

After this estimation of step S208, the communication control means 120 and application management means 140 can then manage the communication means 110 and the applications on the basis of the estimation. Accordingly, they can either start providing one or more of the requested service(s) and process the services(s) to provide the requested information to the mobile node via the communications means 110 (S209) or, if the available energy supply is not sufficient for one or more of the requested services, send back a message to the mobile node declining one or more of the requested services (S210; cf. **Fig. 11****)** and turn the apparatus 100 to the sleep mode, in particular switch the communications means 110 OFF or to a sleeping mode (S211).

That is, the apparatus 100 may, on the basis of the available energy level, provide one, more or all requested services or decline one, more or all requested services. When providing some services and declining other services, the decision which services to provide and which to decline may be performed on the basis of a priority ordering of applications related to the services, wherein the priority ordering may take into account importance of the services and/or power consumption levels associated with processing the applications and providing the respective communication capacities.

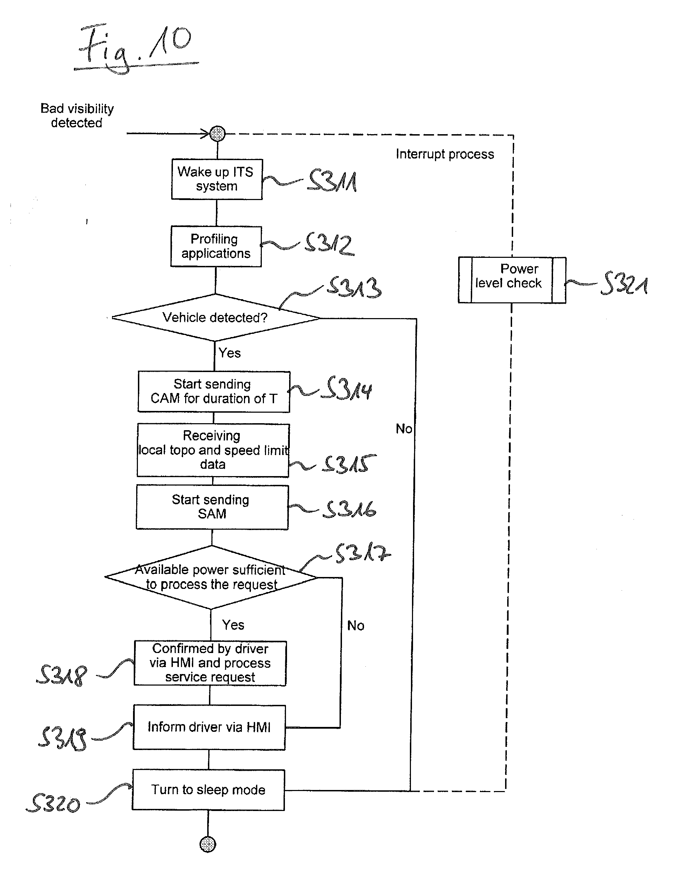

The above-described embodiment is particularly applicable to stationary nodes such as road side units. Another example of an embodiment of the present invention is described with reference to **Fig. 10** which is particularly applicable to mobile nodes such as vehicles (e.g. electric vehicles, plug-in hybrid electric vehicles or others), on-board units and/or personal ITS stations.

On detecting the bad visibility, the apparatus 100 is woken up (S311; similar to step S201 above) and starts the application profiling (S312, similar to S202 above) and starts sending (S314; similar to step S204 above) the periodic CAM messages upon detection (S313; similar to step S203 above) of another node (road side unit, on-board unit, personal ITS station etc.).

Then, the communication means 110 may receive from the other nodes road topology information and speed limit information (S315; e.g. the information sent in step S205) in order to be able to adapt its own movement according to the received information.

Upon sending and/or receiving SAM messages to/from another node (S316), the apparatus 100 can judge (S317) on the basis of the available power level (e.g. determined by the electric energy supply monitoring means 151) whether it is possible to process one or more of the services. If the available power level allows to start and process the communication to receive the service data, the power management means 150 may further estimate how the power supply may be affected by such communication related to the service(s). In case of an electric vehicle or plug-in hybrid vehicle, it may even be determined how the remaining available driving distance can be impacted in terms of distance or in terms of time.

Such information can then be provided (S319) to the user via a human machine interface such as a display unit 190 (cf. e.g. **Figs. 11 to 13****).** The human machine interface may further enable the user, upon receiving the information, to manually decide (S318) on whether to initiate the communication procedure for the one or more services or not (cf. **Fig. 13****).** If the service processing is declined by the user or after processing of the accepted services, the apparatus 100 is switched to a sleep mode and, in particular, the communication means 110 are switched OFF or switched to the sleeping mode.

In **Figs. 11 to 13****,** a display means 190 of a human interface device of the apparatus is illustrated with examples of different information that may be displayed on the display means 190. In **Fig. 11****,** the display means 190 displays a screen notifying the used of the apparatus that a service relating to a particular application is declined, e.g. if the apparatus 100 itself declines the service, e.g., if it detects that the available energy level is too low to provide the service or in case another node to which a request for the service was sent has sent back a signal indicating that the other node has declined the service due to a limited power condition. In **Fig. 12****,** the display means 190 informs the user that a service selected by the user cannot be selected at present, e.g., if it detects that the available energy level is too low to provide the service or in case another node to which a request for the service was sent has sent back a signal indicating that the other node has declined the service due to a limited power condition. In **Fig. 13****,** the display means 190 notifies the user of an electric vehicle or plug-in type hybrid electric vehicle that a selected service, if the related application will be processed, will have the effect that the power supply level is reduced such that the remaining reachable distance will be reduced to a lower distance (x km) in order to give the user the opportunity to either accept or decline the selected service on the basis of the displayed information.

It should be noted that the steps in the above examples can be also carried out in a different order. For example, the apparatus 100 can be woken up upon the detection of other nodes, and application profiling/management may start only when at least one other node is detected. In this case, when the apparatus 100 is woken up, it may collects local environment condition information, e.g. by sending requests to different sensors and/or information providing server infrastructures, and may manage the applications accordingly. It should be further noted that other environment conditions can alternatively or additionally be detected and used.

**Fig. 14** schematically illustrates the procedure of a power usage logging. For example, as soon as the apparatus 100 is woken up for one or more application, e.g. as soon as one or more applications are activated by the application management means 140, the logging of power usage procedure may starts and the data 185 is recorded by the energy consumption monitoring means 152 in a log data file embodying historical data as described above (S402) and stored in the storage means 180 (S403). If necessary, the logged data can then be sent to a third part actor (S404). Thereafter, in step S405, the apparatus 100 may be switched again to the sleep mode.

The utilization of the present invention enables to optimize the power usage and energy efficiency of communication and application activities of nodes of communication network, preferably and most conveniently of ITS stations providing or consuming ITS services in a traffic communication network, by adapting to the communication needs and the application needs. The communication means may be switched ON /OFF or to the active or sleeping modes in adaption to the network congestion, the application management means can activate or deactivate one or more applications depending on the local environment conditions, the communication needs of the applications and the power level of the node. A power usage logging (power consumption history data recording) means may also be added in the apparatus/system for the purpose of improving the application and communication management means efficiency.

In summary, the present invention enables to provide an improved power management configuration regarding the communication and communicational requirements of a communication network such as an ad-hoc network comprising mobile and/or stationary nodes for the purpose of improving energy efficiency. The present invention is particularly applicable and functionally practicable in connection with communication networks in which network nodes are required to communicate with each other regularly, repeatedly, periodically and/or depending on one or more of a plurality of communication-related applications.

## Claims

1. System (100) configured to be communicably connected to network nodes (A, B) of a communication network (200), comprising:
- communication means (110) for communicating with other network nodes (A, B) of the communication network (200),
- communication control means (120) for controlling the communication means (110), the communication control means (120) being configured to switch on/off the communication means (110) and/or switch between an active mode and a sleeping mode of the communication means (110),
- processing means (130) for executing one or more applications, and
- application management means (140) configured to manage the one or more applications to be executed by the processing means (130), the application management means (140) being configured to activate/deactivate one or more of the applications.

2. System according claim 1, further comprising
electric power supply monitoring means (150, 151) for monitoring an electric power supply level of an electric power supply source (300) providing electric power to at least one of the communication means (110), the communication control means (120), the processing means (130) and the application management means (140), and/or
electric power consumption monitoring means (150, 152) for monitoring an electric power consumption level of at least one of the communication means (110), the communication control means (120), the processing means (130) and the application management means (140).

3. System according to claim 2, wherein
the electric power consumption monitoring means (150, 152) is further configured to monitor an electric power consumption level required by processing the one or more applications and/or the communication requirements of the one or more applications including the electric power consumption level of the communication means (110) when processing the one or more applications.

4. System according to claim 3, wherein
the electric power consumption monitoring means (150, 152) is further configured to record electric power consumption level history data indicative of electric power consumption level of the processing means (130) and/or the communication means (110) when processing the one or more applications, and
the communication means (110) is configured to send the recorded electric power consumption level history data and/or electric power future demand estimation data indicating a future demand estimation on the electric power consumption level estimated on the basis of the recorded electric power consumption level history data to another network node (A, B, 500) periodically and/or upon request.

5. Apparatus according to at least one of claims 2 to 4, wherein
the electric power supply monitoring means (150, 151, 153) is further configured to request energy power supply in accordance with the energy level to be required to execute one or more applications on the basis of the monitored electric power consumption levels of the one or more applications.

6. Apparatus according to at least one of claims 2 to 5, wherein
the communication control means (120) is configured to control the communication means (110) on the basis of the electric power supply level monitored by the electric power supply monitoring means (150, 151) and/or on the basis of the electric power consumption level monitored by the electric power consumption monitoring means (150, 152).

7. Apparatus according to at least one of claims 2 to 6, wherein
the application management means (140) is configured to manage the one or more applications on the basis of the electric power supply level monitored by the electric power supply monitoring means (150, 151) and/or on the basis of the electric power consumption level monitored by the electric power consumption monitoring means (150, 152).

8. Apparatus according to at least one of claims 1 to 7, wherein
the application management means (140) is configured to activate/deactivate one or more of the applications in correspondence with priority information (186) indicative of a priority ordering of the one or more applications.

9. Apparatus according claim 8, wherein
the priority ordering of the one or more applications is set in accordance with electric power consumption levels required for processing the one or more applications.

10. Apparatus according to at least one of claims 1 to 9, wherein
the application management means (140) is configured to activate/deactivate one or more of the applications in correspondence with environment information (183) indicative of environmental conditions in the environment of the system (100, C).

11. Apparatus according to claim 10, wherein
the communication network is a traffic-related communication network in which at least part of the network nodes are rendered by traffic vehicles traveling on a road network, and the environmental conditions comprise at least one of weather conditions indicated in weather information data, traffic conditions indicated in traffic information data, visibility conditions indicated in visibility sensor data acquired by a visibility sensor, and/or road network information.

12. Apparatus according to claim 10 or 11 in combination with claim 8, wherein the priority ordering of the one or more applications is set in accordance with the environmental conditions in the environment of the network node (100, C).

13. Apparatus according to at least one of the preceding claims,
wherein the communication control means (120) is configured to control the communication means (110) on the basis of a network status (183, 187) being indicative of network conditions in the surrounding environment of the system (100, C).

14. Apparatus according to at least one of the preceding claims,
wherein the application management means (140) is configured to manage the one or more applications on the basis of a network status (183, 187) being indicative of network conditions in the surrounding environment of the system (100, C).

15. Apparatus according to at least one of the preceding claims, further comprising human machine interface means for indicating to a user whether one or more applications can be activated via the human machine interface means on the basis of the available electric power supply level determined by the electric power supply monitoring means (150, 151) and/or how activating the one or more applications affects the remaining energy supply.
